# EUROPÄISCHE PATENTSCHRIFT

(11) **EP 0 429 623 B1**
(45) Veröffentlichungstag und Bekanntmachung des Hinweises auf die Patenterteilung: **18.10.1995**
(21) Anmeldenummer: 90909708.1
(22) Anmeldetag: 20.06.1990
(51) Int. Cl.: A47F 9/02, A47F 10/02, G01G 1/00

(54) **VORRICHTUNG ZUM KUNDENSEITIGEN ERFASSEN VON WAREN**
DEVICE FOR CHECKING OUT GOODS
DISPOSITIF POUR LA SAISIE DE MARCHANDISES DU COTE DE LA CLIENTELE

(30) Priorität: 20.06.1989 EP 89111174; 14.09.1989 DE 8911035 U
(43) Veröffentlichungstag der Anmeldung: 05.06.1991
(73) Patentinhaber: Siemens Nixdorf Informationssysteme Aktiengesellschaft, 33102 Paderborn (DE)
(72) Erfinder: WIESCHEMANN, Siegfried, D-4790 Paderborn (DE); BAITZ, Günter, D-1000 Berlin 27 (DE); KAMIN, Hartmut, D-1000 Berlin 10 (DE)
(74) Vertreter: Fuchs, Franz-Josef, Dr.-Ing.
(86) Internationale Anmeldenummer: EP9000977
(87) Internationale Veröffentlichungsnummer: WO9015559

(56) Entgegenhaltungen:
- EP-A- 0 327 514
- FR-A- 2 583 966
- GB-A- 2 119 988
- GB-A- 2 161 631
- US-A- 4 779 706

## Beschreibung

Die Erfindung bezieht sich auf ein Warenerfassungsgerät zum kundenseitigen Erfassen von Waren nach dem Oberbegriff des Patentanspruchs 1.

Ein solches Warenerfassungsgerät ist aus der US-A-47 79 706 sowie aus der DE-A-35 24 231 bekannt. Bei dem aus der US-A-47 79 706 bekannten Warenerfassungsgerät begibt sich der Kunde mit seinen in einen Einkaufswagen abgelegten Waren zu einem Erfassungsplatz, legt die jeweilige Ware einzeln auf eine mit einem Scanner kombinierte Waage und dann in eine auf einer weiteren Waage befindliche Einkaufstüte. Mit dem Scanner werden die an den Waren angebrachten Warenkennzeichnungen erfaßt, die an einen Rechner weitergeleitet werden. Der Speicher des Rechners enthält unter anderem den Preis und das Gewicht der Ware. Bei Übereinstimmung des tatsächlichen Gewichts mit dem abgespeicherten Gewicht wird die erfaßte Ware in die Einkaufstüte gelegt. Nach abgeschlossener Warenerfassung erhält der Kunde einen Kassenzettel, dessen Aufdruck von dem Personal an einem Bedienplatz mit dem Inhalt und dem Gewicht der Einkaufstüte verglichen wird.

Nachteilig ist dabei, daß die Warenerfassung auch ordnungsgemäß gekennzeichneter Waren nur sehr langsam erfolgen kann und daß Waren bzw. Artikel ohne oder mit unvollständiger Warenkennzeichnung vom Kunden nicht erfaßt werden können.

Aus der EP-A-0 327 514 (Stand der Technik gemäß Art. 54(3) EPÜ) ist ein Warenerfassungsgerät zum kundenseitigen Erfassen von Waren bekannt, bei dem die Kennzeichnungen von Waren im Normalfall durch eine unterhalb eines Warenerfassungsfensters angeordneten optischen Abtastvorrichtung automatisch erfaßt werden. Wenn eine automatische Warenkennzeichnungserfassung nicht möglich ist, erscheint eine Warnanzeige, und der Kunde wird veranlaßt, die betreffende Kennzeichnung manuell über eine Tastatur einzugeben. Zwischen dem Warenerfassungsfenster und einer Verpackungsstation ist eine Bedienfläche vorgesehen, die sich in Richtung quer zur Transportrichtung der Waren erstreckt.

Der Erfindung liegt die Aufgabe zugrunde, ein Warenerfassungsgerät anzugeben, bei dem die kundenseitige Warenerfassung auch bei nicht ordnungsgemäß gekennzeichneten Waren reibungslos und schnell abläuft.

Diese Aufgabe wird durch die Merkmale des Patentanspruchs 1 gelöst.

Im Normalfall wird die Warenkennzeichnung der einzelnen Waren mit dem Scanner einer Abtasteinrichtung gelesen. Bei den zuvor beschriebenen bekannten Anordnungen können Waren mit beschädigter Warenkennzeichnung durch den Kunden nicht erfaßt werden. Gleiches gilt für an der Ware angebrachte Warenkennzeichnungen, die mit dem Scanner nicht erreicht werden können. Das erfindungsgemäße Warenerfassungsgerät ermöglicht eine automatische Erfassung der Warendaten, wenn die Warenkennzeichnung vollständig und so an der Ware angebracht ist, daß sie von dem Scanner erreicht oder über ein Warenerfassungsfenster geführt werden kann. Das erfindungsgemäße Gerät ermöglicht außerdem, vorzugsweise bei Signalgabe, auch eine manuelle Eingabe der Warendaten, wenn beispielsweise die Warenkennzeichnung beschädigt oder unvollständig ist. Selbstverständlich ist es auch möglich, die Warendaten auch dann manuell, z.B. über eine Eingabetastatur des Warenerfassungsbereichs, in das Warenerfassungsgerät einzugeben, wenn die Warenkennzeichnung an der Ware vollständig und ordnungsgemäß angebracht ist und prinzipiell auch automatisch erfaßt werden könnte.

Vorteilhafterweise können auch die Warendaten einer bestimmten Ware teilweise automatisch erfaßt, teilweise manuell eingegeben werden. Es ist also möglich, mit dem Scanner unvollständige Warenkennzeichnungen zu erfassen und den Rest der Kennzeichnung manuell, d.h. mittels einer Eingabetastatur einzugeben. So können beispielsweise bestimmte Warengruppen (Obst/Gemüse, Frischfleisch, Lebensmittel, Heimwerkerbedarf etc.) mit der Tastatur eingegeben werden, während die Warenkennzeichnung maschinell eingelesen wird. Dadurch ist es möglich, einige Stellen der in der Stellenzahl festgelegten maschinenlesbaren Artikelnummer für andere Zwecke wie z.B. Gewichtsangaben zu nutzen. Dies ist besonders bei gewichtsvariablen Waren wie z.B. Obst interessant. Am Obststand wird die gewünschte Menge in einer Tüte gesammelt, die dann auf einer an sich bekannten, maschinenlesbare Etiketten druckenden Waage ausgewogen wird,. Nach Eingabe der Artikelbezeichnung in die Tastatur der Waage wird ein z.B. selbstklebendes Etikett mit maschinenlesbarer Gewichts-, Waren- und/oder Preisangabe gedruckt, das der Kunde auf die Tüte klebt. Im Warenerfassungsbereich des Warenerfassungsgeräts kann das Etikett mit dem Scanner erfaßt werden. Manuell wird nur noch die Warengruppe z.B. Obst eingegeben, worauf der Rechner den Artikel eindeutig identifizieren und Gewicht mit Preis multiplizieren kann. Demzufolge muß das selbstklebende Etikett keine Preisangabe enthalten. Die Waage kann in solchen Fällen nicht "intelligent" ausgebildet und braucht nicht an das POS-System angeschlossen sein.

Vorteilhaft ist ferner, die Warendaten einer Ware automatisch zu erfassen und die Anzahl der betreffenden Ware manuell einzugeben. In diesem Fall ist eine Multiplikationstaste vorgesehen, so daß es bei größeren Mengen desselben Artikels genügt, ein Exemplar automatisch zu erfassen (zu scannen) und dann die Anzahl und den Multiplikationsbefehl manuell auf einer Tastatur einzugeben. Dies führt zu einer schnelleren Warenerfassung.

Bei einer Weiterbildung werden bereits erfaßte Waren automatisch und/oder manuell ausgebucht. In diesem Fall kann eine Storno-Taste vorgesehen sein, durch deren Betätigung bereits erfaßte Artikel wieder ausgebucht werden können. Eine solche Stornierung kann von dem Kunden insbesondere dann gewünscht sein, wenn ein Artikel beschädigt ist, der Kunde diesen Artikel doch nicht kaufen will oder den sich ergebenden Geldbetrag nicht in bar entrichten kann.

Bei der Stornierung des zuletzt erfaßten Artikels genügt das Betätigen der Storno-Taste und der Artikel wird ausgebucht. Im Falle der Stornierung früher erfaßter Ware wird auf die Betätigung einer Korrekturtaste hin auf dem Bildschirm des Warenerfassungsbereichs die Liste der früher erfaßten Waren nacheinander angegeben. Dabei können mehrere Artikel angezeigt werden, wobei aber nur einer mit einem Symbol als stornierbar gekennzeichnet ist. Durch wiederholtes Betätigen der Korrekturtaste läßt sich die Warenliste an dem Stornosymbol vorbeiführen. Durch Betätigen der Storno-Taste wird der mit dem Stornosymbol gekennzeichnete Arktikel ausgebucht. Es ist ferner, möglich eine Stornierung durch nochmaliges Eingeben der Warenkennzeichnung durchzuführen. Dabei wird die Warenkennzeichnung des zu stornierenden Artikels mit dem Scanner oder der Eingabetastatur noch einmal eingegeben und anschließend die Storno-Taste betätigt. Der Rechner überprüft in einem solchen Fall, ob diese Ware schon einmal erfaßt worden ist und bucht diese bei positivem Prüfergebnis aus. Dieses Verfahren ist besonders für Warenerfassungsgeräte mit Minimalausstattung geeignet, bei denen weder ein Bildschirmgerät noch ein Kassenzetteldrucker vorgesehen ist.

In einem Ausführungsbeispiel kann in Warenbewegungsrichtung vor oder hinter dem Warenerfassungsfenster eine Lichtschranke vorgesehen sein, durch die die Richtung der Warenbewegung festgestellt werden kann. Eine Bewegung der zu erfassenden Ware in Richtung auf den Ausgang des Verkaufsgeschäftes hin bewirkt die Erfassung des Artikels, wohingegen eine Bewegung in entgegengesetzter Richtung die Stornierung des betreffenden Artikels bewirkt. Die Lichtschranken können auch bei nicht maschinenlesbarer Warenkennzeichnung funktionstüchtig sein. Es wird dann die ergonomisch logische Rückgabebewegung gemacht und dann auf der Eingabetastatur die Warenkennzeichnung eingegeben. Dadurch kann das Betätigen der Storno-Taste entfallen.

Der Neigungswinkel im Bereich von 155° bis 180° zwischen der Bedienfläche und der Warenerfassungsfläche ermöglicht ein ungehindertes Überführen der auf der Ware angebrachten Warenkennzeichnung in Richtung auf das Warenerfassungsfenster. Auch sperrige, z.B. längliche Artikel können unproblematisch gedreht und gewendet werden, wobei ein unbeabsichtigtes Betätigen oder Berühren von auf der Bedienfläche angeordneten Bedienelementen und/oder Ein-/Ausgabeöffnungen weitgehend ausgeschlossen ist. Die im Scheitelpunkt des Neigungswinkels zwischen der Bedienfläche und der Warenerfassungsfläche vorgesehene Kante mit leicht quer zur Warentransportrichtung ansteigender Bedienfläche hält insbesondere kasten- oder zylinderförmige Waren vorzugsweise auf der Warenerfassungsfläche, so daß diese Waren bei normaler Belastung nicht auf die Bedienfläche gelangen können. Bei einem solchen Neigungswinkel steht also für die Warenerfassung ein ausreichender Platz zur Verfügung, so daß die Waren insgesamt auch schneller abgefertigt werden können.

Eine solche Bedienfläche mit Neigungswinkel im Bereich von 155° bis 180°, vorzugsweise 165°, ist auf der einen Seite für die Kunden noch gut einsehbar, auf der anderen Seite versperrt die Bedienfläche den Blick auf die Warenerfassungsfläche nur wenig oder gar nicht, so daß das Kontrollpersonal die Warenerfassungsfläche von nahezu allen Seiten schnell überblicken kann. Eine derart angeordnete Bedienfläche ermöglicht im Sinne einer Doppelfunktion zum einen den Einbau von Bedienelementen und/oder Ein-/Ausgabeöffnungen und stellt auf der anderen Seite auch einen Teil der für übergroße Warenpackungen erforderlichen Transportfläche dar, so daß solche Packungen zumindest teilweise auch auf der Bedienfläche abgestellt werden können.

Vorteilhaft ist an einem die Bedienfläche aufnehmenden Oberteil ein einen Bildschirm aufweisendes Datensichtgerät mittels einer Tragvorrichtung verstellbar angebracht. Dadurch ist es möglich, den Bildschirm für den Kunden günstig zu positionieren, so daß sämtliche auf dem Bildschirm dargestellte Informationen gut eingesehen und abgelesen werden können. Die Tragvorrichtung gewährleistet darüber hinaus ein Überführen des Datensichtgerätes in eine von der Warenerfassungs- und der Bedienfläche abgewandte Stellung, so daß selbst übergroße Warenpackungen unproblematisch über die Warenerfassungsfläche geführt werden können.

Günstig ist außerdem, die Eingabetastatur unterhalb des Bildschirms anzuordnen, da auf diese Weise die mit der Tastatur eingegebenen Daten schnell mit einem Blick auf den benachbarten Bildschirm auf ihre Richtigkeit hin überprüft werden können. Es ist aber auch möglich, die Eingabetastatur in einen Teil des Bildschirms zu integrieren, so daß dieser zwar verkleinert, jedoch keine zusätzliche Einrichtung zum Aufnehmen der Eingabetastatur erforderlich ist. Günstig ist bei dieser Ausführungsform der Erfindung, daß Bildschirm und Eingabetastatur eine ebene Fläche bilden und deshalb optisch ansprechend gestaltet werden können.

Ebenso kann die Eingabetastatur eines der auf der Bedienfläche angeordneten Bedienelemente sein. In diesem Fall ist die Eingabetastatur näher zum Warentransportweg angebracht und deshalb für den die Warenerfassung vornehmenden Benutzer leichter zugänglich.

Auch das Datensichtgerät kann in der Bedienfläche vorgesehen sein. Dadurch ist es möglich, ein sehr kompaktes Warenerfassungsgerät zu schaffen, das gegen Beschädigungen durch sperrige Güter weitgehend geschützt ist. Von dem Warenerfassungsgerät abstehende Einrichtungen können in diesem Fall entfallen. Günstig ist dabei, insbesondere bei einer in der Bedienfläche vorgesehenen Eingabetastatur, daß die über die Abtasteinrichtung oder die Eingabetastatur eingegebenen warenbezogenen Daten anhand des nahe dem Warenerfassungsfenster bzw. der Eingabetastatur vorgesehenen Datensichtgerätes leicht und schnell überprüft werden können.

In einer Weiterbildung der Erfindung sind die Eingabetastatur und das Datensichtgerät axial hinter einander quer zum Warenerfassungsfenster der Warenerfassungsfläche angeordnet. Eine solche Anordnung ermöglicht zusätzlich eine schnelle Überprüfung der mittels der Eingabetastatur oder der unter dem Warenerfassungsfenster vorgesehenen Abtasteinrichtung eingegebenen bzw. erfaßten Daten. Da der Benutzer beim Bedienen des Warenerfassungsgerätes zweckmäßigerweise vor dem Warenerfassungsfenster steht, kann er die erfaßten Daten ohne ein Drehen des Kopfes lediglich durch ein Aufblikken kontrollieren.

Günstig ist ferner, eine der in der Bedienfläche vorgesehenen Ausgabeöffnungen als schließbares Ausgabefach für einen Beleg, z.B. einen Warenerfassungsbeleg, auszubilden, da ein solches Ausgabefach zum einen im Sichtbereich des Benutzers liegt, so daß dieser nach Beendigung des Erfassungsvorgangs den Beleg leicht entnehmen kann. Zum anderen ist der Beleg in dem schließbaren Ausgabefach gegen ein unbeabsichtigtes Abreißen oder Beschädigen gut gesichert. Außerdem kann ein solches Warenerfassungsgerät unproblematisch in ein Zuund Abfördersystem eingebaut werden, da auf den Seitenwänden oder der Rückwand eines solchen Gerätes keine Bedienelemente und/oder Ein-/Ausgabeöffnungen angebracht sind.

Vorteilhafterweise ist das Ausgabefach muldenförmig ausgebildet und mit einem Klappdeckel sowie vorzugsweise in einer Bodenwand des Faches mit einem Schlitz zum Zuführen des streifenförmigen Belegs versehen. Die muldenförmige Ausbildung des Ausgabefachs erleichtert die Belegentnahme, während der Klappdeckel als Schutz vor einem unbeabsichtigten Beschädigen des Beleges während der Warenerfassung dient. Der Schlitz ermöglicht ein unproblematisches Zuführen des streifenförmigen Belegs von einer in einem Belegdrucker vorgesehenen Vorratsrolle.

Gemäß einer Weiterbildung der Erfindung hat das Ausgabefach wenigstens an seinem Ende eine teilzylinderförmige Innenwand. Eine solche Ausbildung ermöglicht eine einfache und unproblematische Führung des von dem Schlitz austretenden steifenförmigen Belegs. Üblicherweise wird für jeden erfaßten Artikel eine Druckzeile benötigt, so daß sich der Beleg während des Erfassungsvorgangs ständig verlängert. Eine teilzylinderförmige Innenwand verhindert aber ein Verstopfen des Ausgabefachs und ermöglicht ein Aufrollen des streifenförmigen Belegs. Außerdem ist der Beleg bei einer solchen Ausbildung des Ausgabefachs leichter entnehmbar.

Günstig ist außerdem, daß der Klappdeckel um einen Lagerzapfen, vorzugsweise quer zur Warentransportrichtung schwenkbar ist, wobei die Öffnung des Ausgabefachs bei geöffnetem Klappdeckel vorzugsweise in Richtung auf den Transportweg weist. Mittels einer solchen Ausführung ist der Klappdeckel leicht zu öffnen und das Ausgabefach von der Warenerfassungsseite her leicht zugänglich. Außerdem ist eine Schwenkbewegung ohne großen Kraftaufwand schnell durchführbar.

Günstig ist aber auch, daß der Klappdeckel wenigstens an seinen Enden eine teilzylinderförmige, an die Innenwand des Ausgabefaches angepaßte Unterseite hat, die vorzugsweise eine Führungsrippe mit quer zur Klappdekkeloberseite angeordneter Außenwand ist. Damit ist bei einem Zuführen des Belegs durch den in dem Ausgabefach vorgesehenen Schlitz ein automatisches Aufrollen des länglichen Belegs in dem Ausgabefach gewährleistet, ohne daß dafür eine mechanisch angetriebene Aufwickelvorrichtung nötig ist. Die teilzylinderförmige Innenwand des Ausgabefachs und die teilzylinderförmige Unterseite des Klappdeckels ermöglichen bei geschlossenem Klappdeckel eine kreisförmige oder elliptische Bahn des Belegs. Dieser bildet also in dem Ausgabefach eine lose Rolle. Dadurch ist sichergestellt, daß auch bei zahlreichen auf dem Beleg ausgedruckten Waren kein Papierstau in dem Ausgabefach auftritt. Beim Öffnen des Klappdeckels wird der aufgewickelte Beleg durch die an der Unterseite des Klappdeckels angeformte Führungsrippe um einen gewissen Betrag aus dem Ausgabefach in Richtung auf den Warentransportweg geschoben, so daß dieser vom Benutzer leicht entnommen werden kann.

Ausführungsbeispiele des Erfindungsgegenstandes werden nachfolgenden an Hand der Zeichnung näher erläutert. Es zeigen:
- Figur 1: eine schematische Seitenansicht eines ersten Ausführungsbeispiels eines Warenerfassungsgerätes;
- Figur 2: eine Vorderansicht des Warenerfassungsgerätes gemäß Figur 1;
- Figur 3: eine schematische Seitenansicht, teilweise im Schnitt, eines weiteren Ausführungsbeispiels eines Warenerfassungsgerätes;
- Figur 4: eine Vorderansicht des Warenerfassungsgerätes gemäß Figur 3;
- Figur 5: eine Draufsicht auf das Warenerfassungsgerät gemäß Figur 3;
- Figur 6: einen teilweisen Längsschnitt entlang der Linie VI-VI in Figur 5 durch ein Ausgabefach für einen Beleg mit geschlossenem Klappdeckel;
- Figur 7: einen Längsschnitt durch das Ausgabefach gemäß Figur 6 mit geöffnetem Klappdeckel,

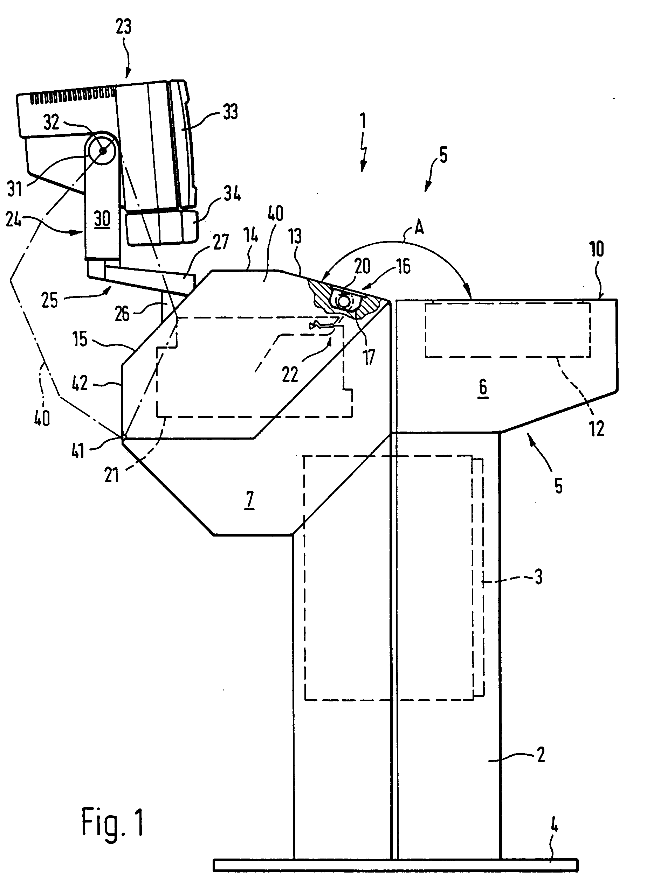

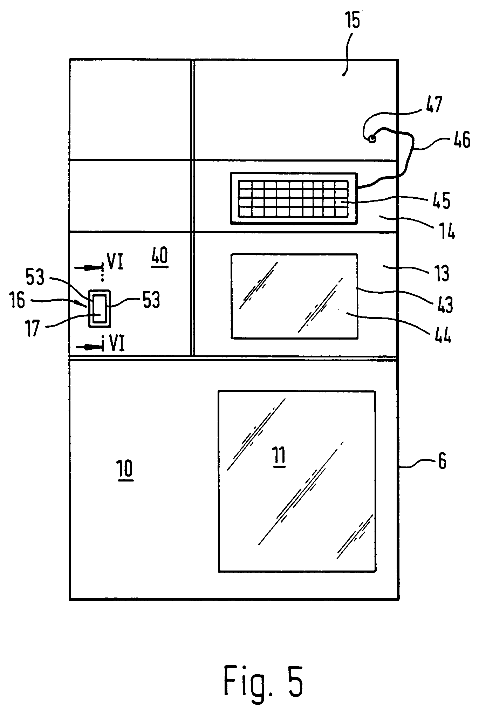

In Figur 1 ist ein Warenerfassungsgerät 1 in einer Seitenansicht dargestellt. Dieses hat ein säulenförmiges Unterteil 2, in welchem ein gestrichelt dargestellter Rechner 3 angeordnet ist. Das Unterteil 2 ist auf einer Bodenplatte 4 abgestützt. Auf dem Unterteil 2 ist ein Oberteil 5 angeordnet, das in einen vorderen, in Figur 1 rechts angeordneten Abschnitt 6 und einen hinteren, in Figur 1 links dargestellten Abschnitt 7 unterteilt ist. Die Oberseite des vorderen Abschnitts 6 ist als waagerechte, einen Transportweg bildende Warenerfassungsfläche 10 ausgebildet, in der ein Warenerfassungsfenster 11 vorgesehen ist (vgl. Figur 5). Unterhalb des Warenerfassungsfensters 11 ist eine in Figur 1 gestrichelt dargestellte optische Abtasteinrichtung 12 zum Erfassen von maschinenlesbaren, an den Waren angebrachten Markierungen vorgesehen. Die Abtasteinrichtung 12 kann ein sogenannter "Scanner" für Strichcodemarkierungen sein. Das Warenerfassungsfenster 11 bildet mit der Oberseite des vorderen Abschnitts 6 eine horizontale ebene Fläche.

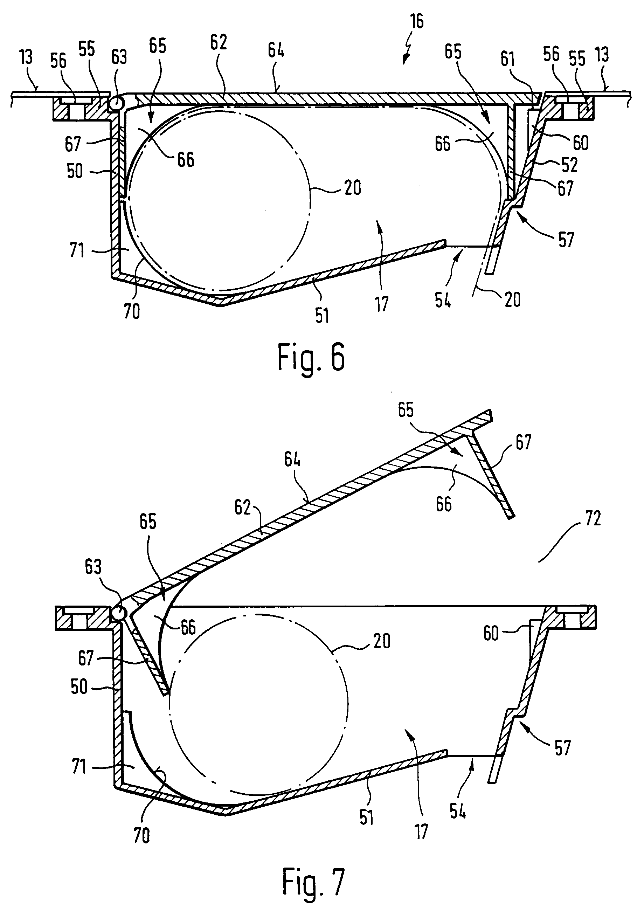

Der hintere Abschnitt 7 des Oberteils 5 ist gemäß Figur 1 vieleckig ausgebildet und hat an seiner Oberseite eine an die Warenerfassungsfläche 10 quer zur Warentransportrichtung sich anschließende Bedienfläche 13, welche gegenüber der Warenerfassungsfläche 10 geneigt ist. Der Neigungswinkel A liegt im Bereich von 135° bis 180°, vorzugsweise im Bereich von 155° bis 180°. Gemäß Figur 1 beträgt der Neigungswinkel A 165°. Die Bedienfläche 13 hat an ihrer weg von dem vorderen Abschnitt 6 weisenden Seite eine waagerechte Ablagefläche 14, an die sich eine zur Rückseite hin abfallende Fläche 15 anschließt. In der Bedienfläche 13 sind Bedienelemente und/oder Ein-/Ausgabeöffnungen vorgesehen. Gemäß Figur 1 ist in den hinteren Abschnitt 7 ebenflächig zur Bedienfläche 13 als Ausgabeöffnung 16 ein schließbares Ausgabefach 17 für einen Beleg 20 (siehe auch Figur 6) vorgesehen. In den hinteren Abschnitt 7 des Oberteils 5 ist unterhalb des Ausgabefachs 17 ein in Figur 1 gestrichelt dargestellter Belegdrucker 21 eingebaut, der eine (nicht näher gezeigte) Vorratsrolle enthält, dessen mit den Angaben der über das Warenerfassungsfenster 11 geführten Waren versehene Anfang in das Ausgabefach 17 geführt wird. Solche Belegdrucker 21 sind bei Registierkassen allgemein als Drucker für Kassenzettel oder als Bondrucker bekannt. In dem Belegdrucker 21 ist nahe dem Ausgabefach 17 eine Schneideinrichtung 22 vorgesehen, die den bedruckten Teil des Beleges 20 von dem unbedruckten Teil der Vorratsrolle abtrennt.

An der zur Rückseite hin abfallenden Fläche 15 ist ein Datensichtgerät 23 mittels einer Tragvorrichtung 24 verstellbar befestigt. Die Tragvorrichtung 24 besteht aus einem Stativ 25 mit einem senkrechten Standrohr 26, dessen oberes Ende in einen kurbelförmigen Ausleger 27 mündet. Das dem Standrohr ferne Ende des Auslegers 27 trägt eine U-förmige Befestigungsgabel 30, dessen Seitenarme das Datensichtgerät 23 teilweise umfassen. Die Seitenarme der Befestigungsgabel 30 haben an ihren oberen Enden Drehlager 31 zum verstellbaren Abstützen des Datensichtgerätes 23. Die Drehlager 31 haben jeweils eine horizontale Drehachse 32, um die das Datensichtgerät 23 um einen gewissen Betrag drehbar ist.

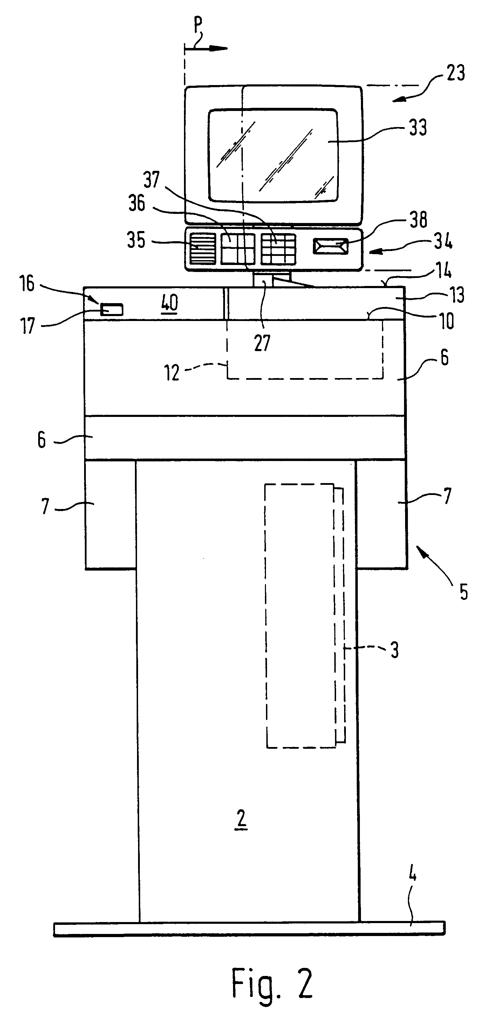

Das Datensichtgerät 23 weist einen zur Warenerfassungsfläche 10 weisenden Bildschirm 33 mit einem darunter angeordneten Bedienteil 34 auf. Das Datenerfassungsgerät 23 ist genauer in Figur 2 dargestellt. Danach enthält das Bedienteil 34 von links nach rechts eine Gegensprechanlage 35, eine Steuertastatur 36, eine Eingabetastatur 37 und einen Kartenleser 38. Diese Bedienteile sind mit dem Rechner 3 verbunden (nicht näher gezeigt). Mit dem Kartenleser 38 sind z.B. Kredit- oder Kundenkarten für unbare Zahlungsweise lesbar. Mit der Eingabetastatur 37 kann z.B. eine den vorgenannten Karten zugeordnete persönliche Kennziffer oder die auf der Ware angebrachten Warenkennzeichnungsdaten manuell eingegeben werden. Mit Hilfe der Steuertastatur 36 kann dem Rechner 3 beispielweise das Ende eines bestimmten Warenerfassungsvorgangs mitgeteilt werden; außerdem kann eine Aufsichtsperson angefordert werden. Über die Gegensprechanlage 35 ist ein Gespräch des Benutzers mit der Aufsichtsperson möglich.

Der den Belegdrucker 21 abdeckende und das Ausgabefach 17 aufnehmende Gehäuseteil ist als Abdeckhaube 40 ausgebildet, die mit Hilfe eines Scharniers 41 schwenkbar am unteren Ende einer Rückseite 42 des hinteren Abschnitts 7 des Oberteils 5 befestigt ist (vergleiche auch Figur 1). Die Abdeckhaube 40 ist aus ihrer geschlossenen Betriebsstellung (durchgezogene Linien in Figur 1 und 2) in ihre offene Bereitsschaftsstellung (strichpunktierte Linie in Figur 1) und umgekehrt überführbar. Dadurch ist der Belegdrucker 21 für Reparatur- und Servicezwecke, wie z.B. das Einlegen einer neuen Vorratsrolle oder das Auswechseln eines Farbbandes nahezu uneingeschränkt zugänglich. Gemäß Figur 2 muß jedoch das Datensichtgerät 23 aus seiner in Figur 2 dargestellten Stellung mit Hilfe des kurbelförmigen Auslegers 27 in die strichpunktiert angedeutete Stellung in Richtung des Pfeiles P verschoben werden, bevor die Abdeckhaube 40 in ihre offene Bereitschaftsstellung überführt werden kann.

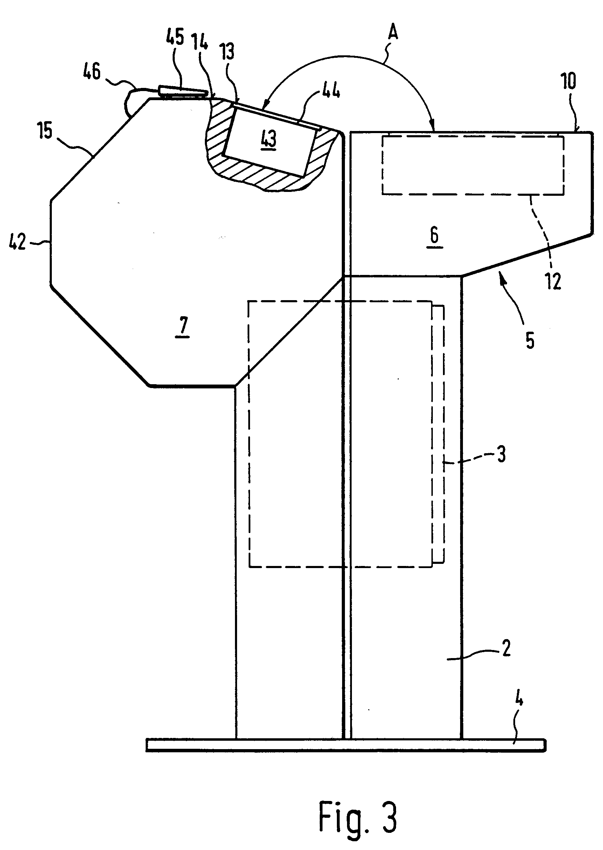

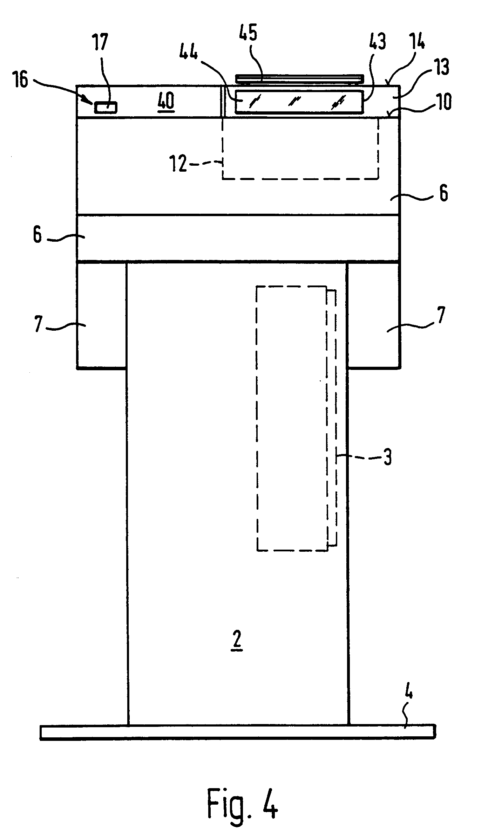

Ein zweites Ausführungsbeispiel des Warenerfassungsgerätes ist in den Figuren 3 bis 5 dargestellt. Gleiche Teile sind hier mit den gleichen Bezugszeichen gekennzeichnet wie im ersten Ausführungsbeispiel gemäß den Figuren 1 und 2.

Gemäß Figur 3 ist ein Datensichtgerät 43 mit einem Bildschirm 44 derart in den hinteren Abschnitt 7 des Oberteils 5 eingesetzt, daß der Bildschirm 44 bündig mit der Bedienfläche 13 abschließt. Eine Eingabetastatur 45 ist auf der sich horizontal an die Bedienfläche 13 anschließenden Ablagefläche 14 angeordnet. Die Eingabetastatur 45 kann fest mit der Ablagefläche 14 verbunden oder lediglich auf diese aufgestellt sein. Im letzteren Fall ist ein Anschlußkabel 46 für die Eingabetastatur 45 vorhanden und durch eine Öffnung 47 in der zur Rückseite hin abfallenden Fläche 15 zum Rechner 3 geführt (siehe Figur 3 und 5). Das Anschlußkabel 46 kann so elastisch ausgebildet sein, daß die Eingabetastatur 45 von der Ablagefläche 14 in Richtung auf die Warenerfassungsfläche 10 oder das Warenerfassungsfenster 11 bewegt werden kann. In diesem Fall ist die Eingabetastatur 45 benachbart einem nahe der Warenerfassungsfläche 10 oder dem Warenerfassungsfenster 11 angeordneten Benutzer angeordnet, so daß die Eingabetastatur leicht, d.h. ohne ein Vorbeugen, bedient werden kann.

Bei den zuvor beschriebenen Ausführungsbeispielen kann die separate Eingabetastatur entfallen, wenn diese in einen Teil des Bildschirms 33 bzw. 44 integriert ist. In diesem Fall hat der jeweilige Bildschirm zumindest teilweise eine berührungsempfindliche, durchsichtige Beschichtung. Solche Einrichtungen sind allgemein als Touch-Screen oder Touch-Display bekannt. Es ist aber auch möglich, daß eines der auf Bedienfläche 13 angeordneten Bedienelemente als Eingabetastatur ausgebildet ist (nicht gezeigt). Gemäß den Figuren 2, 4 und 5 sind die Eingabetastaturen 37 bzw. 45 und die Datensichtgeräte 23 bzw. 43 axial hintereinander quer zum Warenerfassungsfenster 11 der Warenerfassungsfläche 10 angeordnet. Die vorgenannten Einrichtungen sind deshalb hintereinander in einer Reihe quer zur Warentransportrichtung ausgerichtet.

Das als Ausgabeöffnung 16 dienende Ausgabefach 17 ist genauer in den Figuren 6 und 7 dargestellt, welche einen teilweise Längsschnitt entlang der Linie VI-VI in Figur 5 zeigen. Die Ausgabeöffnung 16 ist muldenförmig ausgebildet und weist eine vertikal verlaufende Hinterwand 50, eine etwa V-förmige Bodenwand 51 sowie eine geneigte Vorderwand 52 auf, wobei die Hinterwand 50 und die Bodenwand 51 einstückig ausgebildet sind. Das Ausgabefach 17 ist seitlich durch parallel zueinander anordnete Seitenwände 53 begrenzt (vergleiche Figur 5), wobei der gegenseitige Abstand der Seitenwände wenigstens der Breite des Beleges 20 entspricht.

In ihrem der Vorderwand nahen Bereich hat die Bodenwand 51 einen über die gesamte Breite des Ausgabefachs 17 sich erstreckenden länglichen Schlitz 54, durch den der Beleg 20 von unten in das Innere des Ausgabefachs 17 geführt wird. Die Länge des Schlitzes 54 entspricht deshalb wenigstens der Breite des Belegs 20. Durch diesen Schlitz kann der steifenförmige Beleg 20 von dem Belegdrucker 21 (siehe Figur 1) dem Ausgabefach 17 unproblematisch zugeführt werden.

An die Oberkante der Hinterwand 50, der Vorderwand 52 und der Seitenwände 53 schließt sich ein horizontal verlaufender Befestigungsrahmen 55 an, der Bohrungen 56 zur Aufnahme von Befestigungsmitteln hat. Solche Befestigungsmittel können Schrauben sein, die auf die Unterseite der das Aufnahmefach tragenden Bedienfläche 13 aufgeschweißt oder aufgeklebt sind. Es ist aber auch möglich, den Befestigungsrahmen auf die Bedienfläche mit oder ohne einen den Abmessungen und der Materialdikke des Befestigungsrahmens 55 entsprechenden Rücksprung aufzusetzen.

Die Vorderwand 52 ist vom Schlitz 54 zum Befestigungsrahmen 55 hin geneigt und ansteigend ausgebildet und hat etwa in ihrem Mittelbereich einen horizontal, längs der Belegbreite verlaufenden Absatz 57 sowie nahe dem Befestigungsrahmen 55 einen Anschlag 60, dessen Oberseite 61 horizontal verläuft.

Die Oberseite des Ausgabefaches 17 ist mit einem Klappdeckel 62 verschließbar, der um einen horizontal verlaufenden Lagerzapfen 63 schwenkbar ist. Der Lagerzapfen ist an der Kante ausgebildet, an der der Befestigungsrahmen 55 und die Hinterwand 50 zusammenlaufen. Der Lagerzapfen 63 greift in (nicht näher gezeigte) Ausnehmungen in den Seitenwänden 53 ein. Der Klappdekkel 62 hat eine Oberseite 64, die bündig zur Bedienfläche 13 ausgerichtet ist. An seinen zur Hinterwand 50 und Vorderwand 52 weisenden Enden hat der Klappdeckel eine teilzylinderförmige Unterseite 65, die jeweils als Führungsrippe 66 mit quer zur Klappdeckeloberseite 64 angeordneter Außenwand 67 ausgebildet ist. Beide Außenwände 67 sind ebenso wie die Führungsrippen 66 einstückig mit der Oberseite 64 des Klappdeckels 62 verbunden. Die Außenwände 67 haben eine solche Länge, daß sie etwa bis zur Hälfte der Höhe des Ausgabefachs 17 vorragen. In der gemäß Figur 6 geschlossenen Stellung des Klappdeckels liegt die zur Vorderwand 52 weisende Außenwand 67 auf dem Absatz 57 und die vordere Kante des Klappdeckels 62 auf der Oberseite 61 des Anschlags 60 auf.

Gemäß Figur 6 hat auch das Ausgabefach 17 im Bereich zwischen der Hinterwand 50 und der Bodenwand 51 eine teilzylinderförmige Innenwand 70, die an die teilzylinderförmige Unterseite 65 des Klappdeckels 62 angepaßt ist. Auch diese Innenwand 70 ist als Führungsrippe 71 ausgebildet. Der Radius der teilzylinderförmigen Führungsrippen 66 und 71 entspricht etwa der halben Höhe des gesamten Ausgabefaches 17.

In Figur 7 ist das Ausgabefach 17 mit geöffnetem Klappdeckel gezeigt, so daß eine in Figur 7 nach rechts zum Transportweg weisende Öffnung 72 entsteht. In dieser Stellung ragt die der Hinterwand 50 nahe Außenwand 67 in den Innenraum des Ausgabefaches so vor, daß der zusammengerollte Beleg 20 in Figur 7 nach rechts beaufschlagt und auf der zum Schlitz 54 hin ansteigenden Bodenwand 51 nach oben gleitet.

Das Öffnen und/oder Schließen des Klappdeckels kann manuell oder automatisch erfolgen. So ist es z.B. möglich, den Klappdeckel 62 nach beendetem Bedrucken des Beleges 20 über einen (nicht dargestellten) Antrieb automatisch zu öffnen und nach der Entnahme des Beleges zu verschließen. Das Öffnen und/oder Schließen des Ausgabefaches kann aber auch an die unter dem Warenerfassungsfenster 11 angeordnete Abtasteinrichtung 12 gekoppelt sein, so daß sich der Klappdeckel nach beendeter Warenerfassung automatisch öffnet und bei beginnender Warenerfassung des nächsten Benutzers automatisch schließt.

Nachfolgend wird der Betrieb des Warenerfassungsgerätes beispielhaft erläutert.

Der Benutzer, z.B. ein Kunde in einem Verkaufsgeschäft, legt die mit einer Warenkennzeichnung (Strichcodemarkierung) versehenen Waren auf der Warenerfassungsfläche 10 vor dem Sichtfenster 11 ab (vergleiche Figur 1 und 5). Anschließend werden die jeweiligen Waren mit ihrer Warenkennzeichnung über das Warenerfassungsfenster so geführt, daß die unter dem Warenerfassungsfenster angeordnete Abtasteinrichtung die in der Warenkennzeichnung angegebenen Daten erfassen und auf dem Bildschirm 33 bzw. 44 des Datensichtgeräts 23 bzw. 43 anzeigen kann. Bei besonders sperrigen Gütern oder bei Waren, die keine Warenkennzeichnung tragen, kann die sonst auf der Warenkennzeichnung enthaltene Information über die Eingabetastatur 37 bzw. 45 in das Warenerfassungsgerät eingegeben werden.

Der in dem hinteren Abschnitt 7 des Oberteils 5 angeordnete Belegdrucker 21 druckt die auf der Warenkennzeichnung befindlichen Daten wie z.B. die Warenart und den Preis auf den Beleg 20, der nach jeder auf dem Beleg ausgedruckten Warenangabe weiter von der in dem Drucker befindlichen Vorratsrolle abgezogen wird. Dabei gelangt der Beleg 20 durch den Schlitz 54 des Ausgabefaches 17 und gleitet entlang der der Vorderwand 52 nahen Führungsrippe 66 des geschlossenen Klappdeckels 62 in das Innere des Ausgabefachs 17. Am hinteren Ende des Ausgabefachs wird der Beleg entlang der hinteren Führungsrippe 66 nach unten in Richtung auf die Bodenwand 51 umgelenkt und anschließend von der Führungsrippe 71 der Innenwand 70 in Richtung auf die Vorderwand 52 beaufschlagt. Die Wickel- oder Rollenbildung des Beleges wird dadurch erleichtert, daß der streifenförmige Beleg von der Vorratsrolle vorzugsweise so abgewickelt wird, daß die kreisbogenförmige Vorspannung des Beleges auf der Vorratsrolle der Wickel- oder Rollrichtung in dem Ausgabefach entspricht.

Nach beendeter Warenerfassung wird der Beleg 20 von der Vorratsrolle mittels der Schneideinrichtung 22 abgetrennt. Gleichzeitig oder kurz darauf wird der Klappdekkel des Ausgabefachs manuell oder automatisch geöffnet und der Beleg dem Ausgabefach entnommen. Die über das Warenerfassungsfenster 11 geführten Waren können beispielsweise in einen (nicht gezeigten) bereitgestellten Warenkorb abgelegt werden. Der Kunde bezahlt anschließend den auf dem Beleg ausgedruckten und von dem jeweiligen Datensichtgerät angezeigten Betrag entweder mittels einer Kunden- oder Kreditkarte über den Kartenleser 38 (siehe Figur 2) oder über Geldein- und - ausgabeöffnungen, die auf der Bedienfläche 13 oder in dem Bedienteil 34 angeordnet sein können. Bei auftretenden Problemen mit der Warenerfassung kann der Kunde über die Steuertastatur 36 und die Gegensprechanlage 35 eine Aufsichtsperson anfordern oder von dieser eine Bedienungsanweisung erhalten.

## Patentansprüche

1. Warenerfassungsgerät zum kundenseitigen Erfassen von Waren, mit einem Warenerfassungsgerät für Verkaufsgeschäfte, das eine obere, im wesentlichen waagerechte, einen Transportweg bildende Warenerfassungsfläche (10), in der ein Warenerfassungsfenster (11) zum Erfassen von Warendaten vorgesehen ist, und eine an die Warenerfassungsfläche (10) quer zur Warentransportrichtung sich anschließende Bedienfläche (13) mit Bedienelementen (37, 45) und gegebenenfalls Ein-/Ausgabeöffnungen (16, 17) hat, wobei die Bedienfläche (13) gegenüber der Warenerfassungsfläche (10) geneigt ist, dadurch **gekennzeichnet**, daß der Neigungswinkel (A) im Bereich von 155° bis 180° liegt und daß eines der Bedienelemente als Eingabetastatur (37, 45) zur manuellen Eingabe von Warendaten ausgebildet ist.

2. Warenerfassungsgerät nach Anspruch 1, dadurch **gekennzeichnet**, daß der Neigungswinkel (A) 165° beträgt.

3. Warenerfassungsgerät nach Anspruch 1 oder 2, dadurch **gekennzeichnet**, daß an einem die Bedienfläche (13) aufnehmenden Oberteil (5) ein einen Bildschirm (33) aufweisendes Datensichtgerät (23) mittels einer Tragvorrichtung (24) verstellbar angeordnet ist.

4. Warenerfassungsgerät nach Anspruch 3, dadurch, **gekennzeichnet**, daß am Datensichtgerät (23) unterhalb des Bildschirms (33) eine Eingabetastatur (37) vorgesehen ist.

5. Warenerfassungsgerät nach Anspruch 3, dadurch **gekennzeichnet**, die Eingabetastatur in einen Teil des Bildschirms (33, 44) integriert ist.

6. Warenerfassungsgerät nach einem der Ansprüche 1 bis 5 mit Ausnahme des Anspruchs 3, dadurch **gekennzeichnet**, daß ein Datensichtgerät (23, 43) in der Bedienfläche (13) vorgesehen ist.

7. Warenerfassungsgerät nach einem der Ansprüche 1 bis 6, dadurch **gekennzeichnet**, daß die Eingabetastatur (37, 45) und das Datensichtgerät (23, 43) axial hintereinander quer zum Warenerfassungsfenster (11) der Warenerfassungsfläche (10) angeordnet sind.

8. Warenerfassungsgerät nach einem der Ansprüche 1 bis 7, dadurch **gekennzeichnet**, daß eine der Ausgabeöffnungen (16) ein schließbares Ausgabefach (17) für einen Beleg (20) ist.

9. Warenerfassungsgerät nach Anspruch 8, dadurch **gekennzeichnet**, daß das Ausgabefach (17) muldenförmig ausgebildet und mit einem Klappdeckel (62) versehen ist.

10. Warenerfassungsgerät nach Anspruch 8 oder 9, dadurch **gekennzeichnet**, daß das Ausgabefach (17), vorzugsweise in seiner Bodenwand (51), einen Schlitz (54) zum Zuführen des streifenförmigen Belegs (20) hat.

11. Warenerfassungsgerät nach einem der Ansprüche 8 bis 10, dadurch **gekennzeichnet**, daß das Ausgabefach (17) wenigstens an einem Ende eine teilzylinderförmige Innenwand (70) hat.

12. Warenerfassungsgerät nach einem der Ansprüche 9 bis 11, dadurch **gekennzeichnet,** daß der Klappdeckel (62) um einen Lagerzapfen (63), vorzugsweise quer zur Warentransportrichtung, schwenkbar ist.

13. Warenerfassungsgerät nach einem der Ansprüche 9 bis 12, dadurch **gekennzeichnet**, daß das Ausgabefach (17) bei geöffnetem Klappdeckel (62) eine zum Transportweg weisende Öffnung (72) hat.

14. Warenerfassungsgerät nach einem der Ansprüche 9 bis 13, dadurch **gekennzeichnet**, daß der Klappdeckel kel (62) wenigstens an seinen Enden eine teilzylinderförmige, an die Innenwand (70) des Ausgabefaches (17) angepaßte Unterseite (65) hat.

15. Warenerfassungsgerät nach einem der Ansprüche 11 bis 14, dadurch **gekennzeichnet**, daß die teilzylinderförmige Innenwand (70) des Ausgabefaches (17) und die teilzylinderförmige Unterseite (65) des Klappdeckels (62) jeweils eine Führungsrippe (71, 66) sind, wobei letztere jeweils mit einer quer zur Klappdeckeloberseite (64) angeordneten Außenwand (67) versehen ist.

## Claims

1. Goods check-out device for the customer to check out goods, with a goods check-out device for sales transactions which has an upper, essentially horizontal goods check-out surface (10) which forms a transporting path and in which there is provided a goods check-out window (11) for registering data on goods, and an operator control surface (13) which adjoins the goods check-out surface (10) transversely with respect to the goods transporting direction and has operator control elements (37, 45) and, if appropriate, input/output openings (16, 17), the operator control surface (13) being inclined with respect to the goods check-out surface (10), characterized in that the angle of inclination (A) lies in the range from 155° to 180° and in that one of the operator control elements is designed as an input keyboard (37, 45) for the manual input of data on goods.

2. Goods check-out device according to Claim 1, characterized in that the angle of inclination (A) is 165°.

3. Goods check-out device according to Claim 1 or 2, characterized in that a video display unit (23), having a screen (33), is adjustably arranged by means of a supporting device (24) on an upper part (5) receiving the operator control surface (13).

4. Goods check-out device according to Claim 3, characterized in that an input keyboard (37) is provided on the video display unit (23) underneath the screen (33).

5. Goods check-out device according to Claim 3, characterized in that the input keyboard is integrated into part of the screen (33, 44).

6. Goods check-out device according to one of Claims 1 to 5, with the exception of Claim 3, characterized in that a video display unit (23, 43) is provided in the operator control surface (13).

7. Goods check-out device according to one of Claims 1 to 6, characterized in that the input keyboard (37, 45) and the video display unit (23, 43) are arranged axially one behind the other transversely with respect to the goods check-out window (11) of the goods check-out surface (10).

8. Goods check-out device according to one of Claims 1 to 7, characterized in that one of the output openings (16) is a closeable output compartment (17) for a receipt (20).

9. Goods check-out device according to Claim 8, characterized in that the output compartment (17) is designed in the form of a depression and is provided with a hinged cover (62).

10. Goods check-out device according to Claim 8 or 9, characterized in that the output compartment (17) has, preferably in its bottom wall (51), a slot (54) for feeding in the receipt (20) in strip form.

11. Goods check-out device according to one of Claims 8 to 10, characterized in that the output compartment (17) has, at least at one end, a partially cylindrical inner wall (70).

12. Goods check-out device according to one of Claims 9 to 11, characterized in that the hinged cover (62) is pivotable about a bearing pin (63), preferably transversely with respect to the goods transporting direction.

13. Goods check-out device according to one of Claims 9 to 12, characterized in that the output compartment (17) has, when the hinged cover (62) is open, an opening (72) facing the transporting path.

14. Goods check-out device according to one of Claims 9 to 13, characterized in that the hinged cover (62) has, at least at its ends, a partially cylindrical underside (65), adapted to the inner wall (70) of the output compartment (17).

15. Goods check-out device according to one of Claims 11 to 14, characterized in that the partially cylindrical inner wall (70) of the output compartment (17) and the partially cylindrical underside (65) of the hinged cover (62) are in each case a guide rib (71, 66), the latter being provided in each case with an outer wall (67) arranged transversely with respect to the hinged cover upper side (64).

## Revendications

1. Appareil d'enregistrement de marchandises permettant d'enregistrer des marchandises par le client, comportant un appareil d'enregistrement de marchandises pour des magasins de vente, qui possède une surface supérieure sensiblement horizontale (10) de détection de marchandises, qui forme un trajet de transport et dans laquelle est prévue une fenêtre (11) d'enregistrement des marchandises servant à détecter des données de marchandises, et une surface de service (13), qui se raccorde à la surface (10) d'enregistrement des marchandises transversalement par rapport à la direction de transport des marchandises, et comporte des éléments de commande (37,45) et éventuellement des ouvertures d'entrée/sortie (16,17), la surface de commande (13) étant inclinée par rapport à la surface (10) d'enregistrement des marchandises, caractérisé par le fait que l'angle d'inclinaison (A) est situé dans une gamme de 155° à 180° et que l'un des éléments de commande est agencé sous la forme d'une touche d'entrée (37, 45) pour une introduction manuelle de données concernant les marchandises.

2. Appareil d'enregistrement de marchandises selon la revendication 1, caractérisé par le fait que l'angle d'inclinaison (A) est égal à 165°.

3. Appareil d'enregistrement de marchandises selon la revendication 1 ou 2, caractérisé par le fait qu'un appareil de visualisation de données (23), qui comporte un écran (33), est monté sur une partie supérieure (5) recevant la surface de service (13), de manière à être déplaçable au moyen d'un dispositif de support (24).

4. Dispositif d'enregistrement de marchandises selon la revendication 3, caractérisé par le fait qu'un clavier d'entrée (37) est prévu sur l'appareil de visualisation de données (23) au-dessous de l'écran (33).

5. Appareil d'enregistrement de marchandises suivant la revendication 3, caractérisé par le fait que le clavier d'entrée est intégré dans une partie de l'écran (33,44).

6. Appareil d'enregistrement de marchandises suivant l'une des revendications 1 à 5 à l'exception de la revendication 3, caractérisé par le fait qu'un appareil de visualisation de données (23,43) est prévu dans la surface de service (13).

7. Appareil d'enregistrement de marchandises suivant l'une des revendications 1 à 6, caractérisé par le fait que le clavier d'entrée (37,45) et l'appareil de visualisation de données (23,43) sont disposés axialement l'un derrière l'autre transversalement par rapport à la fenêtre (11) d'enregistrement de marchandises de la surface (10) d'enregistrement de marchandises.

8. Appareil d'enregistrement de marchandises suivant l'une des revendications 1 à 7, caractérisé par le fait que l'une des ouvertures de sortie (16) est un casier de sortie (17) pouvant être fermé, pour un document (20).

9. Appareil d'enregistrement de marchandises suivant la revendication 8, caractérisé par le fait que le casier de sortie (17) est agencé en forme d'auge et est recouvert d'un couvercle basculant (62).

10. Appareil d'enregistrement de marchandises suivant la revendication 8 ou 9, caractérisé par le fait que le casier de sortie (17) possède, de préférence dans la paroi de son fond (51), une fente (54) pour l'amenée d'un document en forme de bande (20).

11. Appareil d'enregistrement de marchandises suivant l'une des revendications 8 à 10, caractérisé par le fait que le casier de sortie (17) possède, au moins à une extrémité, une paroi intérieure de forme partiellement cylindrique (70).

12. Appareil d'enregistrement de marchandises suivant l'une des revendications 9 à 11, caractérisé par le fait que le couvercle rabattable (62) peut basculer autour d'un tourillon (63), de préférence transversalement par rapport à la direction de transport des marchandises.

13. Appareil d'enregistrement de marchandises suivant l'une des revendications 9 à 12, caractérisé par le fait que le casier de sortie (17) possède, lorsque le couvercle rabattable (62) est ouvert, une ouverture (72) tournée vers le trajet de transport.

14. Appareil d'enregistrement de marchandises suivant l'une des revendications 9 à 13, caractérisé par le fait que le couvercle rabattable (62) possède, au moins au niveau de ses extrémités, une face intérieure en forme de cylindre partiel, qui est adaptée à la paroi intérieure (70) du casier de sortie (17).

15. Appareil d'enregistrement de marchandises suivant la revendication 11 à 14, caractérisé par le fait que la paroi intérieure en forme de cylindre partiel (70) du casier de sortie (17) et la face inférieure en forme de cylindre partiel (65) du couvercle rabattable (62) forment respectivement une nervure de guidage (71,66), cette dernière étant pourvue respectivement d'une paroi extérieure (67) disposée transversalement par rapport à la face supérieure (64) du couvercle rabattable.
